# EUROPÄISCHE PATENTSCHRIFT

(11) **EP 0 396 696 B1**
(45) Veröffentlichungstag und Bekanntmachung des Hinweises auf die Patenterteilung: **22.09.1993**
(21) Anmeldenummer: 89912218.8
(22) Anmeldetag: 14.11.1989
(51) Int. Cl.: F16L 55/18, F16L 55/16

(54) **VERFAHREN ZUM REPARIEREN EINER NICHTBEGEHBAREN HAUSZULEITUNG MITTELS EINER FERNGESTEUERTEN, IN DER HAUPTLEITUNG OPERIERENDEN VORRICHTUNG**
PROCESS FOR REPAIRING AN INACCESSIBLE DOMESTIC PIPE USING A REMOTE-CONTROLLED DEVICE OPERATING IN THE MAIN
PROCEDE POUR REPARER UNE CANALISATION DOMESTIQUE INACCESSIBLE AU MOYEN D'UN DISPOSITIF TELECOMMANDE OPERANT DANS LA CONDUITE PRINCIPALE

(30) Priorität: 21.11.1988 CH 4304/88
(43) Veröffentlichungstag der Anmeldung: 14.11.1990
(73) Patentinhaber: KA-TE System AG, CH-8041 Zürich (CH)
(72) Erfinder: HIMMLER, Erich, CH-8800 Thalwil (CH)
(74) Vertreter: Gossel, Hans K., Dipl.-Ing.
(86) Internationale Anmeldenummer: CH8900199
(87) Internationale Veröffentlichungsnummer: WO9005874

(56) Entgegenhaltungen:
- EP-A- 0 253 588
- WO-A-86/05569
- GB-A- 2 147 682

## Beschreibung

Die Erfindung betrifft ein Verfahren zum Reparieren einer nichtbegehbaren, Abwasser führenden Hauszuleitung in demjenigen Abschnitt, mit dem sie in eine ebenfalls nichtbegehbare Hauptleitung einmündet, mittels einer ferngesteuerten, in dieser Hauptleitung operierenden Vorrichtung.

Leitungen, welche Abwässer aus Gebäuden ableiten und die als Hauszuleitungen bezeichnet werden, münden in der Regel unter einer an den Gebäuden vorbeiführenden Strasse in die Hauptleitung ein. Sowohl sie als auch die Hauptleitung sind fast immer von einem Durchmesser, der ihre Begehung unmöglich macht. Nur mittels ferngesteuerter Vorrichtungen, die bereits aus zahlreichen Schriften bekannt sind, ist eine Reparatur möglich, ohne dass das Leitungsnetz ausgegraben und dabei die Strasse für längere Zeit verengt oder für den Verkehr sogar total gesperrt werden muss. Die erwähnten Vorrichtungen sind aber nur für Reparaturen in der Hauptleitung einsetzbar.

Die Schäden, die an Hauszuleitungen auftreten, bestehen aus undichten Stellen, eigentlichen Löchern oder sogar in einem durch Korrosion bedingten völligen Verschwinden dieser Leitung im betreffenden Abschnitt, sodass dort nur noch das die ursprüngliche Hauszuleitung umgebende Erdreich vorhanden ist. Damit besteht aber die Gefahr, dass Abwasser in dieses und damit in das Grundwasser eindringen kann. Der genannte Abschnitt befindet sich meistens dort, wo die betreffende Hauszuleitung in die Haupt leitung mündet. Die Reparatur kann daher von der Hauptleitung her erfolgen. Dies gilt auch dann, wenn die Hauszuleitung nicht mehr verwendet wird. Dies ist meist dann der Fall, wenn das ursprüngliche Gebäude durch ein neues ersetzt wird, bei dem die Hauszuleitungen kaum je an dieselben Stellen zu liegen kommen. Die alten Hauszuleitungen müssen daher nicht nur verschlossen, sondern im genannten Abschnitt auch repariert werden, weil dort sonst bei einem Stau in der Hauptleitung ebenfalls Abwasser im Erdreich versickern kann. Da die Hauptleitung bei einem Neubau nie ganz ausgegraben wird, ist auch deswegen eine Reparatur bezw. Stilllegung von ihr her erforderlich.

Verfahren, bei denen man von der Hauptleitung her arbeitet, sind jedoch bis jetzt nur für die Reparatur dieser selber bekannt. Dabei wird stets ein Einsatzrohr verwendet, das in die Hauptleitung eingeschoben wird, wie z.B. die EP-A-0 253 588, WO 86/05569 oder GB-A-2 147 682 zeigen. Zwar ist dadurch die Hauptleitung auf einfache Weise ausgebessert. Die Nachteile sind aber eine verringerte Durchflusskapazität und die Notwendigkeit, die nun von der Hauptleitung abgeschlossenen Hauszuleitungen wieder aufzufinden, wenn sie weiterhin in Betrieb sein sollen, und das Einsatzrohr dort aufzubohren. Sind diese aufwendigen Massnahmen durchgeführt, muss noch der zum Teil beachtlich grosse Zwischenraum zwischen Hauptleitung und Einsatzrohr mit einer härtenden Masse aufgefüllt werden, und diese muss nun von der Hauptleitung her eingefüllt werden. Damit die Hauszuleitung hierbei nicht wieder verschlossen wird, schiebt man eine Luftblase so in sie hinein, dass entweder ihr hinteres Ende noch im aufgebohrten Loch des Einsatzrohres verbleibt oder sie an einem dort angebrachten Abdeckschild angebracht ist, worauf sie aufgepumpt wird. Dann muss aber noch eine weitere Bohrung am Einsatzrohr angebracht werden, um durch sie hindurch die Masse einfüllen zu können. Die defekte Stelle an der Hauszuleitung wird aber dadurch nicht ausgebessert. Die eingefüllte Masse strömt nämlich praktisch drucklos in Längsrichtung des Zwischenraumes weg und ist daher nicht in der Lage, den Druck der Luftblase zu überwinden, die sich an der Reparaturstelle bis zum umgebenden Erdreich ausgedehnt hat und somit den Platz einnimmt, den die Masse ausfüllen sollte.

Die genannten Verfahren sind daher nicht nur untauglich für den angestrebten Zweck, sondern auch unzweckmässig, denn man kann Hauptleitungen auch ohne Einsatzrohr reparieren, wie z.B. die CH-A-640 623 bezw. die EP-B-0 025 204 zeigen. Nicht nur kann man dadurch die kapazitätsverringernde Durchmesserreduktion der Hauptleitung vermeiden, sondern auch die dort verwendete, auf ihren ursprünglichen Durchmesser abgestimmte Reparaturvorrichtung, die nicht in das Einsatzrohr passen würde, weiterverwenden. Es ist nämlich nicht bekannt, wie der angeführte Stand der Technik zeigt, mit ihr auch die Zweigleitung, also Hauszuleitung, an ihrer Mündungsstelle auszubessern.

Es wird daher von dem aus EP-A- 0253 588 bekannten Verfahren gemäß Oberbegriff von Anspruch 1 ausgegangen, wobei die dort erwähnte, bekannte Vorrichtung eine Druckluftzuführung aufweist, auf die in einem ersten, ebenfalls bekannten Verfahrensschritt eine aufblasbare Luftblase aufgesetzt und durch Schwenken und anschliessendem Vorschub die Druckluftzuführung mindestens über einen Teil in die Hauszuleitung eingeführt und dann bis zum Anliegen aufgepumpt wird. In einem späteren, auch bekannten Verfahrensschritt werden ein Abdeckschild sowie eine aushärtende Masse durch die Hauptleitung an die Mündung der zu reparierenden Hauszuleitung gebracht. Von diesem gesamten Stand der Technik unterscheidet sich nun das erfindungsgemässe Verfahren durch die kennzeichnenden Merkmale des Anspruches 1.

Dieses Verfahren sorgt, wie ersichtlich, auch für den Druckaufbau und damit für die notwendige Verdichtung der Masse an der Reparaturstelle. Es ist derart einfach, dass für seine Ausführung die bekannte Vorrichtung nur geringfügig abgeändert werden muss, was ebenfalls von grossem Vorteil ist.

Das erfindungsgemässe Verfahren soll anhand der vorliegenden Zeichnungen beispielsweise näher erläutert werden, es zeigen:
- Fig. 1: eine Aufsicht auf die dafür verwendete Vorrichtung,
- Fig. 2: den Beginn des Verfahrens,
- Fig. 3: eine erste, daran anschliessende Phase,
- Fig. 4: das Ausfüllen des Hohlraumes an der Schadstelle,
- Fig. 5: eine weitere, fakultative Phase, nämlich das Ausbohren der im Hohlraum ausgehärteten Masse,

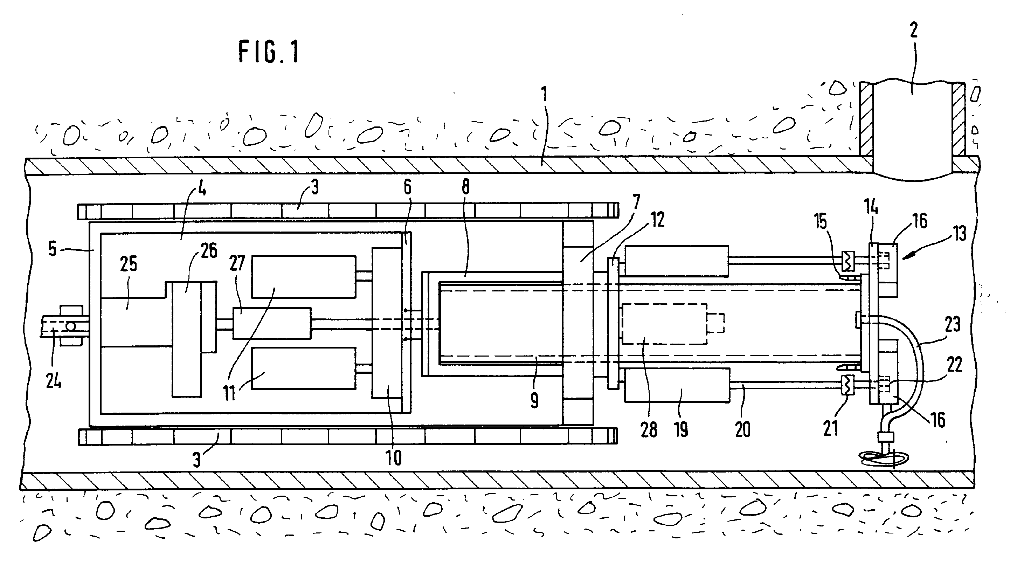

Fig. 1 zeigt lediglich in schematischer Weise die Vorrichtung in Aufsicht. Diese entspricht hier derjenigen nach der EP-PS 0 211 825, weshalb nur die für das Verständnis des nachfolgend beschriebenen Verfahrens notwendigen Bestandteile dargestellt sind; Einzelheiten können der genannten Druckschrift entnommen werden. Die Vorrichtung, und dies ist einer der wesentlichen Vorteile der Erfindung, braucht nämlich nur geringfügig umgebaut zu werden, damit sie ausser der Reparatur der Hauptleitung 1, für die sie entwickelt wurde, auch die Reparatur der in diese einmündenden Hauszuleitung 2 durchführen kann. Beide Leitungen 1, 2 sind von einem Durchmesser, der jede Begehung verunmöglicht. Es kann also nur eine ferngesteuerte Vorrichtung zum Einsatz gelangen, die an irgendeiner Stelle der Hauptleitung 1 durch einen Schacht in diese eingebracht wird, der für eine Begehung gross genug ist.

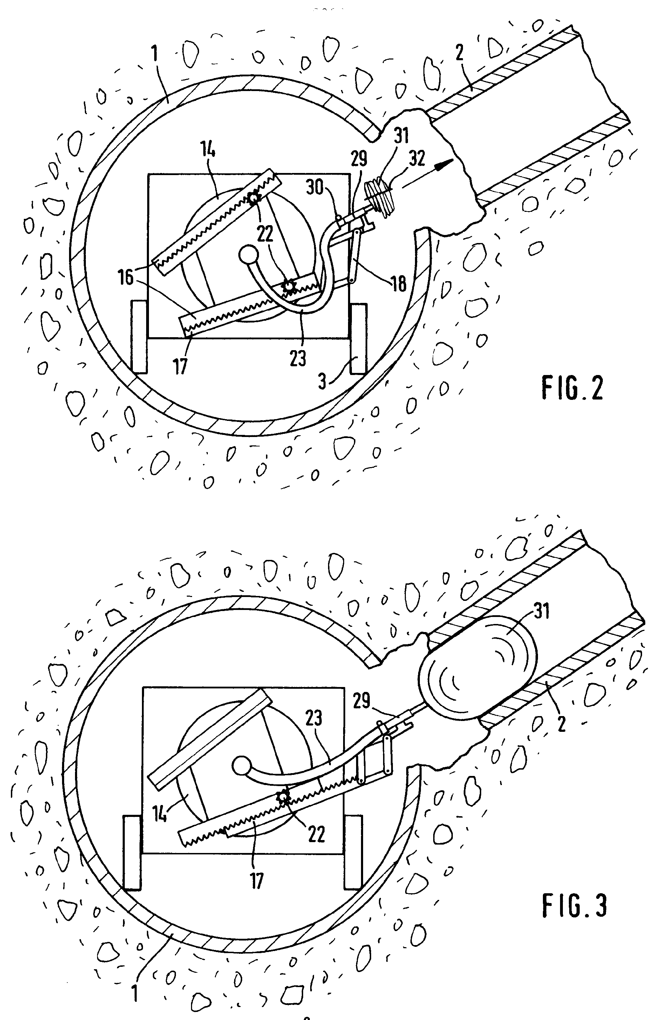

Die Vorrichtung ist ein motorangetriebener Wagen, der im vorliegenden Falle auf Raupen 3 fährt; es könnten aber auch normale Räder sein. Die Raupen 3 oder Räder tragen eine Grundplatte 4, auf welcher eine senkrechte Endwand 5, eine Lagerplatte 6 und ein breites Stützlager 7 angebracht sind. Das Stützlager 7 dient zur Lagerung eines Hohlzylinders 8, der über einen Teil seiner Länge eine derartige Ausnehmung aufweist, dass er dort nur noch eine Halbschale bildet. Dieser Hohlzylinder 8 ist um seine Längsachse drehbar im Stützlager 7 gelagert und dient zur Aufnahme eines Rohres 9, welches vom in der Figur rechten Ende her in den Hohlzylinder 8 eingeschoben und mit ihm durch nicht näher dargestellte Verriegelungen lösbar verbunden wird. Der Hohlzylinder 8 ist durch die Lagerplatte 6 hindurch mit einem Getriebe 10 verbunden, das von zwei parallel zueinander angeordneten Motoren 11 angetrieben wird. Bei laufenden Motoren dreht sich daher nicht nur der Hohlzylinder 8, sondern auch das Rohr 9 sowie ein Flansch 12 am Einschubende des Hohlzylinders. Auf das in Fig. 1 rechte Ende des Rohres 9 ist eine Einrichtung 13 aufgesetzt, die bisher zum Auftragen von Spachtelmasse in der Hauptleitung 1 und zum Verstreichen dieser Masse an der Innenwand derselben diente, nun aber für den neuen Verwendungszweck leicht abgeändert wird. Sie weist im wesentlichen wie bisher einen Rohrabschlussdeckel 14 auf, der mittels leicht lösbaren, nur symbolisch dargestellten Verschlüssen 15 leicht am Rohr 9 befestigt werden kann. Dieser Rohrabschlussdeckel 14 trägt zwei feste Führungen 16 für zwei verschiebbare Zahnstangen 17, die vor allem aus den Fig. 2 - 4 ersichtlich sind. Diese annähernd radial verschiebbaren Zahnstangen 17 weisen an ihren Enden je ein Parallelogrammgelenk 18 auf, an dessen freiem Ende je ein Werkzeug montiert werden konnte. Diese Gelenke 18 dienen eigentlich dazu, die Werkzeuge über unrunde Stellen in der Hauptleitung hinwegzuführen, diese Unrundheiten also auszugleichen. Für den vorliegenden Verwendungszweck sind sie nicht erforderlich. Die Verschiebung der Zahnstangen 17 erfolgt durch Elektromotoren 19, die am Flansch 12 montiert sind und über Wellen 20, je eine Klauenkupplung 21 und je ein Ritzel 22 (Fig. 2) die Zahnstangen verschieben. Die Klauenkupplungen 22 sind notwendig, damit die ganze Einrichtung 13 leicht vom Rohr 9 abgenommen und nachher wieder auf dieses aufgesetzt werden kann, denn dieses Rohr enthält auch die Spachtelmasse und muss nach deren Aufbrauchen wieder gefüllt bezw. durch ein gefülltes ersetzt werden. Diese Masse wird normalerweise durch einen biegsamen Schlauch 23 vom Zentrum des Rohrabschlussdeckels 14 zum Spachtel am einen Ende der einen Zahnstange gebracht. Dazu dient Druckluft, welche vom linken Ende des Wagens über eine Leitung 24 hereingebracht und über einen Anschlussblock 25, ein Steuerventil 26 und eine Drehmuffe 27 in das Rohr 9 hineingeleitet wird. Die Drehmuffe 27 ist deswegen notwendig, weil das Steuerventil 26 fest montiert ist, der Hohlzylinder 8 und das Rohr 9 jedoch um ihre Längsachse rotierbar sind. Mit diesen rotiert auch die Einrichtung 13.

Die vorstehende Beschreibung der Vorrichtung ermöglicht es nun, das erfindungsgemässe Verfahren anhand der Fig. 2 - 5 besser zu erläutern. Der Wagen wird innerhalb der Hauptleitung 1 an die Stelle der zu reparierenden Hauszuleitung 2 gebracht, was dank der an ihm unterhalb des Rohres 9 am Flansch 12 montierten Fernsehkamera 28 (Fig. 1) ohne weiteres möglich ist; diese bewegt sich bei Drehung des Flansches 12 auf einer Kreisbahn um die Längsachse des Rohres 9, sodass die Einmündungsstelle der Hauszuleitung 2 sichtbar gemacht und im Detail studiert werden kann. Der Schlauch 23 wird nun an seinem freien Ende über ein Rohrstück 29 geschoben und mit einer Schlauchbride 30 befestigt. Auf dieses Rohrstück 29, das am Ende des betreffenden Parallelogrammgelenkes 18 montiert ist, wird die Einlassöffnung einer Luftblase 31 aufgeschoben. Diese Luftblase ist vorerst noch zusammengefaltet, damit sie die Verschiebung des Wagens nicht behindert, und mit einem dünnen, aus Büro und Haushalt bekannten Gummiring 32 zusammengehalten. Durch Einschalten der Motoren 11 wird nun die ganze Einrichtung 13 soweit gedreht, dass anschliessend daran die eine Zahnstange 17 mittels des ihr zugeordneten Motors 19 und des Ritzels 22 genau in der Längsachse der Hauszuleitung 2 vorgeschoben werden kann. Hat die Luftblase die richtige Position gemäss Fig. 3 erreicht, wird sie vom Druckluftsystem des Wagens, also von der Leitung 24 und über das Rohrstück 29 aufgeblasen. Der Gummiring 32, der nicht für eine solche Ausdehnung eingerichtet ist, wird hierbei zerrissen. Die Luftblase 31 wird solange aufgepumpt, bis sie sich an die Innenwand der Leitung 2 anlegt. Hierbei verankert sie sich derart an dieser relativ rauhen Innenwand, dass sie beim anschliessenden Zurückfahren der Zahnstange 17 vom Rohrstück 29 abgerissen wird und in der eingenommenen Lage verbleibt. Ein Rückschlagventil in der Luftblase 31 verhindert das Entweichen der Luft aus der abgetrennten Luftblase.

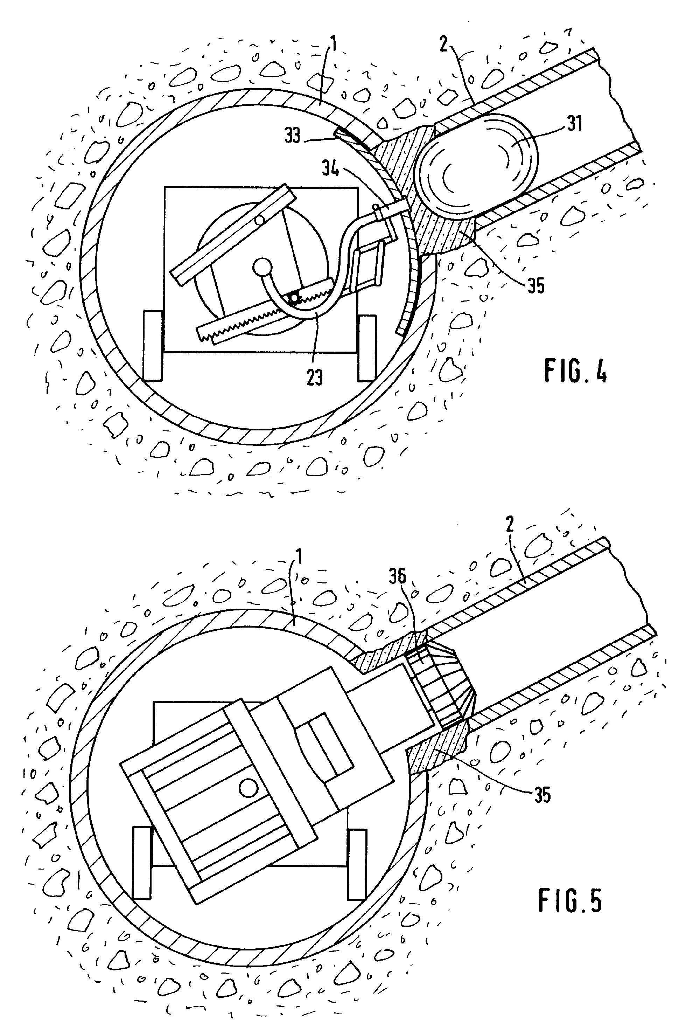

Wie es nun weitergeht, zeigt Fig. 4. Die Zahnstange 17 wird zurückgefahren und der ganze Wagen in der Hauptleitung 1 zum Serviceschacht zurückgefahren. Dort wird nun ein Abdeckschild 33 auf das Ende des Parallelogrammgelenkes 18 aufgesetzt. Dieses weist ein enges Durchlassrohr 34 auf, sodass der Schlauch 23 nun an ihm befestigt werden kann. Während dieser Montage ist auch das Rohr 9 mit Spachtelmasse gefüllt worden. Der Wagen fährt nun wieder zur Hauszuleitung 2, und das Abdeckschild 33 wird über die Mündung derselben gelegt. Bei Einschalten der Druckluftzufuhr wird nun die Spachtelmasse (Epoxyharz oder ein zementöses Material) durch den Schlauch 23 und das Durchlassrohr 34 hindurchgepresst und gelangt in den durch die Luftblase 31, das Abdeckschild 33 und das Erdreich rund um den wegkorrodierten Abschnitt gebildeten Hohlraum, den sie ausfüllt. Nach dem Aushärten ist ein solider Verschluss 35 entstanden, der aber dank der Luftblase 31 nur relativ wenig Material benötigte. Ohne die Luftblase 31 hätte man sehr viel mehr Material hineinbringen müssen, das ausserdem noch wegen der fehlenden Unterlage erheblich weniger verdichtet und daher auch weniger solid gewesen wäre.

Wenn die Absicht bestand, die Hauszuleitung 2 stillzulegen, ist die Arbeit damit beendet. Noch vor dem völligen Aushärten kann man mit der anderen, hier nicht verwendeten Zahnstange einen Spachtel, der schon bei der ursprünglichen Vorrichtung vorhanden war, über die Spachtelmasse bewegen und diese glattstreichen. Zuerst muss natürlich das Abdeckschild 33 entfernt werden. Die Bewegung des Spachtels ist in der EP-PS 0 211 825 beschrieben. Die Luftblase 31 bleibt eingeschlossen.

Soll jedoch die Leitung 2 in Betrieb bleiben, muss der Verschluss 35 aufgebohrt werden, wie aus Fig. 5 ersichtlich. Die weiter oben beschriebene Vorrichtung wird nun durch eine solche ersetzt, die einen radial vorschiebbaren Bohrer oder Fräskopf 36 besitzt. Solche Werkzeuge sind bekannt; eines davon ist in der EP-PS 0 025 204 beschrieben, ein anderes in WO/7154. Ist die Vorrichtung für Bohren und Spachteln eingerichtet wie in der erstgenannten Druckschrift, muss lediglich das Abdeckschild 33 entfernt werden. Der Verschluss 35 wird also von der Hauptleitung 1 her auf den Durchmesser der Hauszuleitung 2 aufgebohrt. Die Luftblase 31 wird beim Durchstossen des Verschlusses 35 zerstört; ihre Ueberreste werden später durch das wieder in der Leitung 2 strömende Wasser in die Hauptleitung 1 und von dort aus weggeschwemmt.

Wesentlich ist bei diesem Verfahren, dass sowohl bei Fig. 4 als vor allem auch bei Fig. 5 das Erdreich, das durch die meist starke und oft totale Korrosion des betreffenden Abschnittes der Leitung 2 ungeschützt offenlag, nun wieder abgedichtet ist, und dass damit ein Eindringen von Abwasser in das Grundwasser verhindert ist. Wie schon erwähnt, kann das Abwasser vielfach auch von der Hauptleitung 1 her eindringen, wenn diese bis an ihr Fassungsvermögen ausgelastet ist.

Das dargestellte Verfahren hat im weiteren auch den Vorteil, dass die schon reparierte und neu aufgebohrte Hauszuleitung (Fig. 5) jederzeit nachträglich wieder stillgelegt werden kann, indem man nochmals einen Verschluss gemäss Fig. 4 aufbringt, ihn dann aber nicht mehr aufbohrt. Auch allfällige Verwechslungen der Hauszuleitungen, was gelegentlich vorkommen kann, lassen sich so problemlos korrigieren.

## Patentansprüche

1. Verfahren zum Reparieren einer nichtbegehbaren, Abwasser führenden Hauszuleitung in demjenigen Abschnitt, in welchem sie in eine ebenfalls nichtbegehbare Hauptleitung einmündet, mittels einer ferngesteuerten, in dieser Hauptleitung (1) operierenden Vorrichtung, die eine um ihre Längachse schwenkbare und radial zu ihr ausfahrbare Druckluftzuführung (16, 17, 23) aufweist, wobei in einem ersten Verfahrensschritt auf diese eine aufblasbare Luftblase (31) aufgesetzt und durch Schwenken und anschliessendem Vorschub der Druckluftzuführung mindestens über einen Teil ihrer Länge in die Hauszuleitung eingeführt und dann bis zum Anliegen aufgepumpt wird, worauf in einem anschliessenden zweiten Schritt die Druckluftzuführung zurückgefahren wird und sich hierbei von der Luftblase trennt, welche auch nach dieser Trennung aufgeblasen bleibt, und worauf in einem nachfolgenden Verfahrensschritt eine aushärtende Masse (35) durch die Hauptleitung (1) hindurch an die Mündung der Hauszuleitung (2) gebracht wird, dadurch gekennzeichnet, dass der zu reparierende Abschnitt durch Anlegen eines Abdeckschildes (33) an die Innenwand bei der genannten Mündung an seinem einen Ende begrenzt wird, dass die im ersten Verfahrensschritt genannte Einführung der Luftblase in die Hauptzuleitung derart weit durchgeführt wird, dass sie mindestens über den genannten Teil ihrer Länge an dem letzten noch intakten Abschnitt der Hauszuleitung (2) zur Anlage kommt, um den daran anschliessenden, zu reparierenden Abschitt auch an diesem Uebergang der beiden Abschnitte, gegenüber seinem erstgenannten Ende, zu begrenzen und solcherarts einen sowohl vom Inneren der Hauptleitung als auch vom Inneren der Hauszuleitung abgeriegelten, nur durch das Abdeckschild (33), durch das aus dem intakten Abschnitt der Hauszuleitung herausragenden Ende der Luftblase und durch das den zu reparierenden Abschnitt umgebende Erdreich eindeutig begrenzten Hohlraum zu bilden, und dass zuletzt dieser Hohlraum durch wenigstens einen durch das Abdeckschild hindurchführenden Durchgang hindurch mit der aushärtenden Masse ausgefüllt wird.

2. Verfahren nach Anspruch 1, bei welchem die solcherarts reparierte Hauszuleitung wieder in Betrieb genommen wird, dadurch gekennzeichnet, dass nach dem Aushärten der genannten Masse das Abdeckschild (33) entfernt und mittels eines Bohr- oder Fräskopfes (36), der in der Hauptleitung (1) ferngesteuert an die Stelle gebracht und dort radial ausgefahren wird, die ausgehärtete Masse auf den Innendurchmesser des noch intakten Abschnittes der Hauszuleitung (2) ausgebohrt wird.

## Claims

1. Process for repairing an inaccessible domestic pipe conducting sewage water, in that section in which it joins an also inaccessible main (1), by means of a remote-controlled device operating in that main which is equipped with a conduit for pressurized air (16, 17, 23) rotatable about its longitudinal axis and radially extendable to it, a first process step comprising said conduit to be provided with an inflatable air bag to be placed on it, to be introduced into the domestic pipe over at least a part of its length by rotating and subsequently advancing the pressurized air conduit and to be inflated until contacting said pipe; a subsequent second step comprising the withdrawal of the pressurized air conduit which thereby separates from the air bag, the air bag remaining inflated also after this separation; a further process step comprising a curing material (35) brought to the mouth of the domestic pipe (2) through the main (1), characterized in that the section to be repaired is delimited at one of its ends by placing a cover (33) onto the interior wall of the main at said mouth, that the introduction of the air bag into the main, referred to in the first process step, is carried out to such an extent that the air bag contacts, over at least said part of its length, the ultimate still intact section of the domestic pipe in order to delimit the adjacent section to be repaired also on this connection of the two sections, opposed to its said first end, and in this manner forming a space separated from the interior of the main as well as from the interior of the domestic pipe and definitely delimited only by the cover (33), the end of the air bag which protrudes from the intact section of the domestic pipe and by the soil surrounding the section to be repaired and that finally this space is filled with the curing material through at least one passage leading through the cover.

2. Process according to Claim 1, during which the domestic pipe repaired in this manner is put back in operation, characterized in that, after curing of said material, the cover (33) is removed and that, by means of a boring or grinding head (36) brought to site within the main (1) by remote control and radially extended there, the material is bored to the inner diameter of the still intact section of the domestic pipe.

## Revendications

1. Procédé pour réparer une conduite domestique d'évacuation d'eaux usées, dans laquelle personne ne peut pénétrer, la réparation devant être faite dans la partie dans laquelle cette conduite débouche dans une conduite principale dans laquelle, également, personne ne peut pénétrer, la réparation étant faite au moyen d'un dispositif télécommandé qui opére dans cette conduite principale (1) et présente des moyens d'amenée d'air comprimé (16, 17', 23) capables de pivoter autour de leur axe longitudinal et déployables radialement par rapport à celui-ci, procédé dans lequel au cours d'une première étape on applique sur ces moyens d'amenée d'air sous pression un soufflet ou vessie à air (31, 31') gonflable et, par pivotement suivi d'une progression desdits moyens d'amenée d'air sous pression, on l'introduit, sur au moins une partie de sa longueur, dans la conduite domestique puis on le gonfle jusqu'à application, après quoi, au cours d'une deuxième étape on rétracte les moyens d'amenée d'air comprimé et on les sépare alors du soufflet ou vessie à air qui, après cette séparation reste encore gonflé, après quoi, au cours d'une étape de procédé suivante, on applique, par la conduite principale (1) une masse durcissante (35) à l'embouchure de la conduite domestique (2) caractérisé par le fait que la partie à réparer est délimitée en sa première extrémité par application d'un bouclier de recouvrement (33) contre la paroi intérieure dans la région de l'embouchure précitée, par le fait que ladite introduction du soufflet ou vessie à air dans la conduite principale est exécutée, dans la première étape de procédé, sur une distance telle qu'elle vienne au contact de la dernière partie encore intacte de la conduite domestique (2), sur au moins ladite partie de sa longueur, afin que la partie à réparer, succédant à cet endroit, soit aussi limitée, en cette transition des deux parties, par rapport à sa première extrémité nommée, et de former ainsi une cavité nettement délimitée par le terrain entourant la partie à réparer et par l'extrémité du soufflet ou vessie à air dépassant de la partie intacte de la conduite domestique ainsi que par le bouclier de recouvrement (33), cette cavité étant verrouillée aussi bien depuis l'intérieur de la conduite principale que depuis l'intérieur de la conduite domestique, et par le fait que l'on remplit finalement cette cavité avec de la masse durcissante, par au moins un passage traversant le bouclier de recouvrement.

2. Procédé selon revendication 1, dans lequel la conduite domestique ainsi réparée est remise en service, caractérisé par le fait qu'après le durcissement de ladite masse, le bouclier de recouvrement (33) est enlevé et, au moyen d'une tête de forage ou de fraisage (36) qui est mise dans la conduite principale (1) et télécommandée de manière à être déployée radialement sur place, on réalise dans la masse durcie un forage au diamètre intérieur de la partie encore intacte de la conduite domestique (2).
